Europäisches Patentamt

European Patent Office

Office européen des brevets

(11) Publication number: **0 114 519**
**B1**

## EUROPEAN PATENT SPECIFICATION

(45) Date of publication of patent specification: **09.09.87**

(51) Int. Cl.⁴: **F 22 B 37/42,** G 21 C 17/00

(21) Application number: **83307895.9**

(22) Date of filing: **22.12.83**

(54) **Controlling leakage between primary and secondary coolant circuits of a pressurised water reactor system.**

(30) Priority: **24.12.82 DE 3248029**

(43) Date of publication of application:
**01.08.84 Bulletin 84/31**

(45) Publication of the grant of the patent:
**09.09.87 Bulletin 87/37**

(84) Designated Contracting States:
**AT BE CH DE FR GB IT LI LU NL SE**

(56) References cited:
**DE-A-3 115 344**

(73) Proprietor: **BROWN BOVERI REAKTOR GmbH
Dudenstrasse 44
D-6800 Mannheim 1 (DE)**

(72) Inventor: **Day, Bobby Lee
Am Eschbach 9c
D-5401 Waldesch (DE)**

(74) Representative: **Cotter, Ivan John et al
D. YOUNG & CO. 10 Staple Inn
London WC1V 7RD (GB)**

Courier Press, Leamington Spa, England.

## Description

This invention relates to a method of controlling leakage between primary and secondary coolant circuits or loops inside a steam generator of a pressurised water reactor system.

During shutdown of a nuclear power plant with a pressurised water reactor, as long as heat removal from the primary coolant circuit or loop occurs through the steam generator, a saturation pressure corresponding to the temperature of the secondary water supply in the steam generator prevails in the secondary circuit or loop of the steam generator. The coolant on the primary side of the steam generator has a slightly higher temperature and is kept undercooled by connection to a pressuriser with a substantially higher pressure than the saturation pressure of the primary coolant. In view of these conditions, the pressure on the primary side in the steam generator is necessarily higher than the pressure on the secondary side. In the event of the occurrence of a heat-transfer tube leak, radioactive primary coolant therefore flows into the secondary side of the steam generator, giving rise to the hazard of liberation of radioactivity as well as flooding of the steam generator.

In traditional methods for controlling these incidents, the leakage is reduced during shutdown of the system by reducing the pressure differential between the primary coolant and the secondary side of the steam generator. Complete pressure equalisation (leakage = zero) is possible by foregoing undercooling of the primary coolant and thus producing saturation conditions in the primary coolant circuit. This condition is permissible under some circumstances, but is highly undesirable since it makes it difficult to guarantee cooling of the core.

According to the invention there is provided a method of controlling leakage between primary and secondary coolant circuits inside a steam generator of a pressurised water reactor system, the method being characterised by shutting off a live steam line and a feedwater line connected to the secondary circuit, and injecting gas to increase the pressure in the secondary circuit.

A preferred method embodying this invention and described hereinbelow controls leakage of the type mentioned by bringing about a pressure equalisation (i.e. altering the pressure differential) between the primary coolant circuit and a secondary area of a steam generator, while a pressure margin (referred to herein as a sub-cooling margin) is maintained between the actual and saturation condition of the primary coolant whereby the primary coolant is sub-cooled. The method thus produces a pressure equalisation without loss of the sub-cooling margin from saturation of the primary coolant.

A particular refinement of the method provides that the pressure prevailing in the secondary circuit or area is brought to a value below a permissible steam generator pressure by the injection of gas, and that the primary coolant pressure is lowered to the pressure then prevailing in the secondary circuit. Thus, even in steam generators with a limited permissible pressure, the sub-cooling margin from saturation of the primary coolant may be maintained.

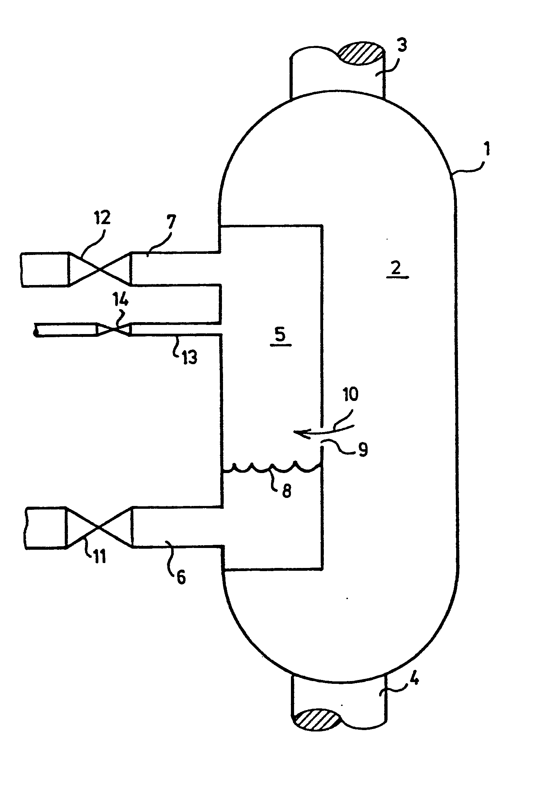

The invention will now be further described, by way of illustrative and non-limiting example, with reference to the accompanying drawing, the sole figure of which is a schematic view of a steam generator.

The single figure of the drawing shows schematically a steam generator 1 of a pressurised water reactor system (not shown). Primary coolant flows through a primary coolant circuit comprising a tube bundle symbolised by a space 2. The primary coolant is introduced through a line 3 from a reactor pressure vessel, and is fed back to the vessel through a line 4. A secondary circuit of the steam generator is symbolised by a space 5. Water introduced through a feedwater line 6 flows around the tube bundle conducting the primary coolant and leaves the steam generator 1 as steam through a live steam line 7. The change of the feedwater from the liquid into the vaporised state is indicated by a line 8.

If a tube in the tube bundle conducting the primary coolant should break, radioactive primary coolant may reach the secondary circuit 5 of the steam generator since the pressure of the primary coolant is always higher than the pressure in the secondary circuit. The position of such a break is illustrated by an opening 9, through which the primary coolant reaches the secondary circuit 5 in the direction of an arrow 10. Shutoff valves 11 and 12 positioned in the feedwater and live steam lines 6 and 7 are then closed. Also, of course, other auxiliary lines (not shown) such as blowdown lines, recirculation lines, and drainlines, should be suitably isolated. Nitrogen gas is injected into the secondary circuit 5 through a line 13 connected to the steam generator 1 and to a source of gas (not shown), after opening of a shutoff valve 14, until the same pressure prevails there as in the primary circuit 2. The pressure present in the secondary circuit 5 is composed of the live steam pressure and the partial pressure of the injected nitrogen gas. A sub-cooling margin from saturation pressure, which corresponds to the partial pressure of the injected nitrogen gas, can then be maintained in the primary coolant. This is very important since an adequate sub-cooling margin from saturation pressure allows the reactor system to be shut down safely through other steam generators. For the purposes of this description and the claims, the term "gas" is not limited to nitrogen gas but is meant to include other suitable gaseous substances such as, for example, steam at a pressure above the saturation pressure of the water in the secondary circuit in those steam generators where such use of steam is suitable, such as those of the U-tube type.

If the secondary circuit 5 of the steam generator 1, for example, is limited to a permissible pressure by a safety valve, then after closing the shutoff valves 11 and 12, only so much gas is injected through the line 13 that the total pressure formed by the partial pressures of live steam and gas lies below the permissible pressure. The primary coolant pressure is then brought down to this total pressure of the secondary circuit 5, so that a pressure equalisation also occurs. Here also, the partial pressure of gas represents a measure of the sub-cooling margin of the primary coolant from the saturation pressure. It may actually be smaller than in the previously described example, but is adequate to allow a safe shutdown of the reactor system through the other steam generators.

**Claims**

1. A method of controlling leakage between primary and secondary coolant circuits (2, 5) inside a steam generator (1) of a pressurised water reactor system, the method being characterised by shutting off a live steam line (7) and a feedwater line (6) connected to the secondary circuit (5), and injecting gas to increase the pressure in the secondary circuit (5).

2. A method according to claim 1, wherein the steam pressure prevailing in the secondary circuit (5) is brought to a value below a permissible steam generator pressure by the injection of gas, and the primary coolant pressure is then lowered to the pressure prevailing in the secondary circuit (5).

**Patentansprüche**

1. Verfahren zur Beherrschung von Leckagen zwischen primären und sekundären Kühlkreisläufen (2, 5) innerhalb eines Dampferzeugers (1) eines unter Druck stehenden Wasserreaktorsystems, dadurch gekennzeichnet, daß eine Frischdampfleitung (7) und eine Speisewasserleitung (6), welche mit dem Sekundärkreislauf (5) verbunden sind, abgesperrt werden, und daß Gas eingespeist wird, um den Druck in dem Sekundärkreislauf (5) zu erhöhen.

2. Verfahren nach Anspruch 1, wobei der vorherrschende Dampfdruck in dem Sekundärkreislauf (5) durch Einspeisen von Gas auf einen Wert unterhalb eines zulässigen Dampferzeugerdruckes gebracht und der Druck des Primärkühlmittels dann auf den Druck erniedrigt wird, welcher in dem Sekundärkreislauf (5) vorherrscht.

**Revendications**

1. Procédé de protection contre les fuites entre les circuits primaires et secondaires (2, 5) d'agent de refroidissement à l'intérieur d'un générateur de vapeur d'eau (1) d'un système de réacteur à eau sous pression, le procédé étant caractérisé par le fait que l'on ferme un tuyau à vapeur vive (7) et un tuyau à eau d'alimentation (6) reliés au circuit secondaire (5) et que l'on injecte du gaz pour accroître la pression dans le circuit secondaire (5).

2. Procédé selon la revendication 1, dans lequel on amène la pression de vapeur régnant dans le circuit secondaire (5) à une valeur inférieure à une pression permise de générateur de vapeur d'eau par l'injection de gaz et on abaisse alors la pression d'agent de refroidissement primaire à la pression régnant dans le circuit secondaire (5).